# EUROPEAN PATENT APPLICATION

(11) **EP 2 617 485 A2**
(43) Date of publication of application: **24.07.2013**
(21) Application number: 13250006.7
(22) Date of filing: 14.01.2013
(51) Int. Cl.: B01F 17/52, C02F 5/10

(54) **Filter aid**

(30) Priority: 19.01.2012 GB 201200847
(71) Applicant: Sentinel Performance Solutions Ltd, Runcorn Cheshire WA7 4QX (GB)
(72) Inventor: Day, Paul, 2000 Antwerp (BE); Walker, William Mark, Comberbach CHeshire CW9 6AU (GB)
(74) Representative: Fenwick, Elizabeth Anne

(57) **Abstract**

A method of optimising the filter action of a filtering means in an aqueous containing liquid system in which the aqueous containing liquid system passes through an in-line mechanical filter means is characterised by introducing an additive formulation comprising a soluble polyelectrolyte dispersant into the aqueous containing liquid system. Unlike a conventional cleaner, the additive formulation is not flushed from the system by draining the circuit and then replacing the system water, but remains in the system to effect removal by an in-line filter of the particulate debris upon which it has acted. Further, in remaining in the system, the additive formulation will disperse and suspend any solid particulate matter subsequently formed (e.g. by corrosion) or introduced into the system to allow effective capture by the filter.

## Description

The invention relates to a novel additive formulation for the treatment of an aqueous liquid, being either water or a mixture of water with a water-soluble organic solvent. Examples of organic solvents are glycols (such as propylene glycol or ethylene glycol), alcohols, glycerine, and similar polar materials where such mixtures are commonly used as heat transfer fluids in heating circuits or heat collection circuits of heat pump applications.

The additive formulation which can be referred to as a 'filter aid' is particularly applicable to a 'closed' aqueous system such as the circulating fluid of a heating system served by a central heat source. Insoluble particulate debris is a problem to the circulating water of such systems as it may have detrimental effects caused by settling as sludge or deposit in any part of the circuit, or interfering with moving parts in pumps, boilers etc. For that reason filter units are often employed on the circuit to remove particulate debris from the circulating water. The term 'filter' has its usual meaning in this field i.e. it refers to any device that separates particulate solid matter from water by either manipulation of fluid flow to exploit differing densities or by passing through any form of screening medium designed to retain solids whilst allowing liquids to pass through. Such devices rely on the particulate matter being accessible for filtration by being in suspension in the water passing through. It follows that such devices cannot remove solids which have already settled. Typical system design and the architecture of some components thereof ensures there are portions of the circuit which have comparatively low, non-turbulent flow where gravity provides that appreciable amounts of suspended matter actually settles, thus preventing the filter from effecting an efficient removal of a significant proportion of solid matter from the system. This settled debris and sludge may blind heat transfer surfaces, provoke under-deposit corrosion and interfere with the optimum hydrodynamic flow of the circuit. It is well known that such problems also reduce boiler efficiency and markedly degrade the ability of the system to deliver the required amount of heat.

The aim of the invention is to introduce an additive formulation, to be used in combination with an in-line filter, that penetrates, disperses and suspends settled solids into the circulating water - and in addition prevents circulating solids not yet captured by a filter from settling elsewhere in the system-thereby maximising the effect of the filter in removing insoluble contaminants from the whole system. That is why the additive formulation is called a 'filter aid'. Unlike a conventional cleaner, the additive formulation is not flushed from the system by draining the circuit and then replacing the system water, but remains in the system to effect removal by an in-line filter of the particulate debris upon which it has acted. Further, in remaining in the system, the additive formulation will disperse and suspend any solid particulate matter subsequently formed (e.g. by corrosion) or introduced into the system to allow effective capture by the filter.

According to one aspect of the present invention what is claimed is the use of an additive formulation which comprises a soluble polyelectrolyte dispersant in combination with an in-line mechanical filter means acting on an aqueous containing liquid.

According to another aspect of the present invention a method of optimising the filter action of a filtering means in an aqueous containing liquid system in which the aqueous containing liquid system passes through an in-line mechanical filter means is characterised by introducing an additive formulation comprising a soluble polyelectrolyte dispersant into the aqueous containing liquid system.

The term 'soluble polyelectrolyte dispersant' has its usual meaning in the field of chemistry i.e. a soluble compound, generally polymeric and of high molecular weight which, by virtue of charge density, molecular steric and/or electronic configuration strongly adsorbs to hydrophobic particles in aqueous media to promote dispersion and/or to maintain dispersed particles in suspension.

The additive formulation comprises, inter alia, one or more soluble polyelectrolyte dispersants, preferably with at least one penetrating surfactant/ wetting agent. The additive formulation may be added to the aqueous containing liquid system as a solid or preferably as a solution in a nonaqueous or more preferably aqueous medium. The concentration of the polyelectrolyte dispersant when dissolved in the aqueous containing liquid system is preferably in the range 1 ppm to 2000ppm, more preferably in the range 10ppm to 2000 ppm.

The polyelectrolyte may be an anionic, cationic, non-ionic or amphoteric polyelectrolyte.

The polyelectrolyte may be any water soluble natural or synthetic, anionic, cationic or non-ionic (or water-soluble salts thereof) containing moieties and/or having sufficiently high molecular weight which in solution bestows dispersive properties to the polymer. Examples of natural polymers are lignins and derivatives, phospholipids and the like. Examples of anionic polymers are those based on combinations of one or more of monomer types such as acrylic acid and /or methacrylic acid, which may also have carboxyl-, sulphur- or similarly ionisable moieties. Particular examples are polymers of hydroxyethyl sulphonate and hydroxyethylmethacrylate-sulphonate (HEMA-S).

Examples of cationic polyelectrolytes are those based on quaternised aminoesters and aminoamides, tertiary aminoalkyl esters and tertiary aminoalkylamides.

Examples of non-ionic polyelectrolyte are polyacrylamides and poly(ethylene oxides).

An example of an amphoteric polyelectrolyte is any polymer formed together from cationic and anionic monomers.

Preferably the additive formulation is based on a polymer of more than one type of monomer e.g. two or three different monomers.

Preferably the additive formulation also includes a surfactant (wetting agent) which can facilitate penetration of settled deposits or sludge in order that the dispersant can lift and suspend the particles. Examples of suitable surfactants are amphoteric surfactants such as those based on betaines, glycinates, propionates or imidazolines or any combination or anionic surfactants such as those based on aklylaryl sulphonates, alkyl sulphates, ether sulphates, ether carboxylates, sulphosuccinates, sulphosuccinamates, paraffin sulphonates, olefin sulphonates, sarcosinates, isethionates, taurates, lignin derivatives, or phosphate esters or any combination. They may also be cationic surfactants such as those based on quaternary nitrogen molecules or pyridine derivatives or may be non-ionic such as those based on alkoxylates, block copolymer alkylolamides or combinations thereof.

It will be appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable combination.

## Claims

1. A method of optimising the filter action of a filtering means in an aqueous containing liquid system in which the aqueous containing liquid system passes through an in-line mechanical filter means is **characterised by** introducing an additive formulation comprising a soluble polyelectrolyte dispersant into the aqueous containing liquid system.

2. A method according to claim 1 wherein the additive formulation also comprises at least one penetrating surfactant/wetting agent.

3. A method according to claim 2 wherein the penetrating surfactant/wetting agent is an anionic agent.

4. A method according to any preceding claim wherein the soluble polyelectrolyte dispersant comprises an anionic, cationic or non-ionic polymer.

5. A method according to claim 4 wherein the soluble polyelectrolyte dispersant comprises an anionic polymer.

6. A method according to any preceding claim wherein the soluble polyelectrolyte dispersant comprises a polymer of at least 2 different monomers.

7. A method according to any preceding claim wherein the soluble polyelectrolyte dispersant comprises a polymer of 3 different monomers.

8. A method according to any preceding claim wherein the soluble polyelectrolyte dispersant is added as a solution to the aqueous containing liquid system.

9. A method according to any preceding claim wherein the soluble polyelectrolyte dispersant is added as an aqueous solution to the aqueous containing liquid system.

10. A method according to any of claims 1 to 8 wherein the soluble polyelectrolyte dispersant is added as a solid to the aqueous containing liquid system.

11. A method according to any preceding claim wherein the concentration of the polyelectrolyte dispersant when dissolved in the aqueous containing liquid system is in the range 1 ppm to 2000 ppm.

12. A method according to any preceding claim wherein the concentration of the polyelectrolyte dispersant when dissolved in the aqueous containing liquid system is in the range 10 ppm to 2000 ppm.

13. A method of optimising the filter action of a filtering means in an aqueous containing liquid system according to any preceding claim wherein the aqueous containing liquid system is a closed aqueous system.

14. A method of optimising the filter action of a filtering means in an
aqueous containing liquid system according to claim 13 wherein the aqueous containing liquid system is the circulating fluid of a heating system served by a central heat source.
